# EUROPEAN PATENT APPLICATION

(11) **EP 2 703 954 A2**
(43) Date of publication of application: **05.03.2014**
(21) Application number: 13182589.5
(22) Date of filing: 02.09.2013
(51) Int. Cl.: G06F 3/01, G06F 3/03

(54) **Method and apparatus for extracting three-dimensional distance information from recognition target**

(30) Priority: 03.09.2012 KR 20120097211; 09.08.2013 KR 20130094951
(71) Applicant: Samsung Electronics Co., Ltd, Gyeonggi-do 443-742 (KR)
(72) Inventor: Lee, Jin-Kyung, 443-742 Gyeonggi-do (KR); Kwon, Dong-Wook, 443-742 Gyeonggi-do (KR); Kim, Kyung-Il, 443-742 Gyeonggi-do (KR); Kim, Min-Ho, 443-742 Gyeonggi-do (KR); Lee, Gi-Sang, 443-742 Gyeonggi-do (KR); Lee, Sang-Bo, 443-742 Gyeonggi-do (KR); Jin, Young-Gu, 443-742 Gyeonggi-do (KR); Choi, Jin-Wuk, 443-742 Gyeonggi-do (KR)
(74) Representative: Grünecker, Kinkeldey, Stockmair & Schwanhäusser

(57) **Abstract**

A method and apparatus for extracting three-dimensional distance information from a recognition target is provided, which enables a gesture input from a user to be correctly recognized using distance information from the recognition target, and at the same time makes it possible to efficiently save power required for detection of the gesture input. The method includes determining if a recognition target exists within a predetermined range; when the recognition target exists within the predetermined range, generating a 3D image for the recognition target; and calculating a distance to the recognition target by using the 3D image.

## Description

### BACKGROUND OF THE INVENTION

### 1. Field of the Invention

The present invention generally relates to a method and apparatus for extracting three-dimensional distance information, and more particularly, to a method and apparatus for extracting three-dimensional distance information from a recognition target, which enables a gesture input from a user to be correctly recognized using the distance information from the recognition target, and at the same time makes it possible to efficiently save power required for detection of the gesture input.

### 2. Description of the Related Art

A method for extracting three-dimensional (3D) distance information is broadly divided into active and passive approaches. In the active approach, a device that is to extract 3D distance information emits energy for extracting the 3D distance information. The energy may be an optical wave, a ultrasonic wave, a microwave, and the like. The device that is to extract 3D distance information projects a wave onto a specific scene or object and photographs the projected scene or object, thereby extracting a distance from the device to the scene or object.

In the passive approach, a device that is to extract 3D distance information extracts the 3D distance information only by a photographed image, without emitting energy. The device photographs a scene or object, for which 3D distance information is to be extracted, by using an imaging device and processes the photographed image, thereby extracting a distance from the device to the scene or object.

Gesture control is a process for recognizing a user's gesture to control a device, and includes a method using distance information and a method which does not use distance information. The method that does not use distance information recognizes a user's gesture only by a photographed two-dimensional (2D) image, and thus needs to properly separate a recognition target (that is, a hand, arm, leg, face, object, or the like) from the background. In contrast to this, the method using distance information ensures better performance than the method not using distance information because it can separate a recognition target from the background by using distance information and obtain more accurate shape information for the recognition target.

In the active approach, that is, the 3D distance information extraction method in which energy is emitted and distance information is detected using the emitted energy, it is necessary to continuously emit energy in order to detect the distance information. Since a device that extracts 3D distance information does not know when a user's gesture occurs, the device must continuously emit energy regardless of the existence of a user's gesture. The fact that the device continuously emits energy even when a user's gesture does not occur means that power is unnecessarily consumed and thus the use time of the device is shortened.

### SUMMARY OF THE INVENTION

Accordingly, the present invention has been made to address at least the problems and disadvantages described above, and to provide at least the advantages described below.

An aspect of the present invention provides a method and apparatus for extracting three-dimensional distance information from a recognition target, which enables a gesture input from a user to be correctly recognized using distance information from the recognition target, and at the same time makes it possible to efficiently save power required for detection of the gesture input.

In accordance with an aspect of the present invention, a method of extracting three-dimensional (3D) distance information is provided. The method includes determining if a recognition target exists within a predetermined range; when the recognition target exists within the predetermined range, generating a 3D image for the recognition target; and calculating a distance to the recognition target by using the 3D image.

In accordance with another aspect of the present invention, an apparatus for extracting three-dimensional (3D) distance information is provided. The apparatus includes a camera controller that determines if a recognition target exists within a predetermined range; a 3D camera that generates a 3D image for the recognition target when the recognition target exists within the predetermined range; and a distance calculator that calculates a distance to the recognition target by using the 3D image.

In accordance with yet another aspect of the present invention, a terminal is provided. The terminal includes a detector configured to detect a recognition target existing within a predetermined range; a three-dimensional (3D) camera that generates a 3D image corresponding to the recognition target; a distance calculator configured to calculate a distance to the recognition target by using the 3D image; and a controller configured to determine a gesture input corresponding to a shape of the recognition target, based on the 3D image and the distance to the recognition target, and perform an operation according to the gesture input.

In accordance with still yet another aspect of the present invention, a method of performing an operation corresponding to a gesture input by a terminal is provided. The method includes detecting a recognition target existing within a predetermined range; generating a three-dimensional (3D) image corresponding to the recognition target; calculating a distance to the recognition target by using the 3D image; determining a gesture input corresponding to a shape of the recognition target, based on the 3D image and the distance to the recognition target; and performing an operation according to the gesture input.

In accordance with another aspect of the present invention, a non-transitory computer-readable recording medium having programs stored thereon is provided, which when executed by a processor, perform a method of extracting three-dimensional (3D) distance information using an apparatus for extracting the 3D distance information, the method including determining if a recognition target exists within a predetermined range; when the recognition target exists within the predetermined range, generating a 3D image for the recognition target; and calculating a distance to the recognition target by using the 3D image.

In accordance with yet another aspect of the present invention, a non-transitory computer-readable recording medium having programs stored thereon is provided, which when executed by a processor, perform a method of performing an operation corresponding to a gesture input by a terminal, the method including detecting a recognition target existing within a predetermined range; generating a three-dimensional (3D) image corresponding to the recognition target; calculating a distance to the recognition target by using the 3D image; determining a gesture input corresponding to a shape of the recognition target, based on the 3D image and the distance to the recognition target; and performing an operation according to the gesture input.

### BRIEF DESCRIPTION OF THE DRAWINGS

The above and other aspects, features, and advantages of the present invention will be more apparent from the following detailed description taken in conjunction with the accompanying drawings, in which:
FIG. 1 is a block diagram illustrating a configuration of an apparatus for extracting three-dimensional (3D) distance information according to an embodiment of the present invention;
FIG. 2 is a flowchart illustrating a method of extracting 3D distance information by the apparatus shown in FIG. 1;
FIG. 3 is a flowchart illustrating another method of extracting 3D distance information by the apparatus shown in FIG 1;
FIG. 4 is a flowchart illustrating yet another method of extracting 3D distance information by the apparatus shown in FIG. 1;
FIG. 5 is a flowchart illustrating still yet another method of extracting 3D distance information by the apparatus shown in FIG 1;
FIG. 6 is a block diagram illustrating a configuration of a terminal including the apparatus shown in FIG. 1;
FIG. 7 is a flowchart illustrating a method of performing an operation corresponding to a gesture input by the terminal shown in FIG. 6;
FIG. 8 is a flowchart illustrating another method of performing an operation corresponding to a gesture input by the terminal shown in FIG 6;
FIG. 9A illustrates a terminal which detects a recognition target by using a 2D camera;
FIG. 9B illustrates a terminal which detects a recognition target by using a proximity sensor;
FIG. 10 is a flowchart illustrating yet another method of performing an operation corresponding to a gesture input by the terminal shown in FIG. 6;
FIG. 11 is a flowchart illustrating still yet another method of performing an operation corresponding to a gesture input by the terminal shown in FIG. 6; and
FIG. 12 is a flowchart illustrating still yet another method of performing an operation corresponding to a gesture input by the terminal shown in FIG. 6.

### DETAILED DESCRIPTION OF EMBODIMENTS OF THE PRESENT

### INVENTION

Hereinafter, various embodiments of the present invention will be described with reference to the accompanying drawings. Various specific definitions found in the following description are provided only to help general understanding of the present invention, and it is apparent to those skilled in the art that the present invention can be implemented without such definitions.

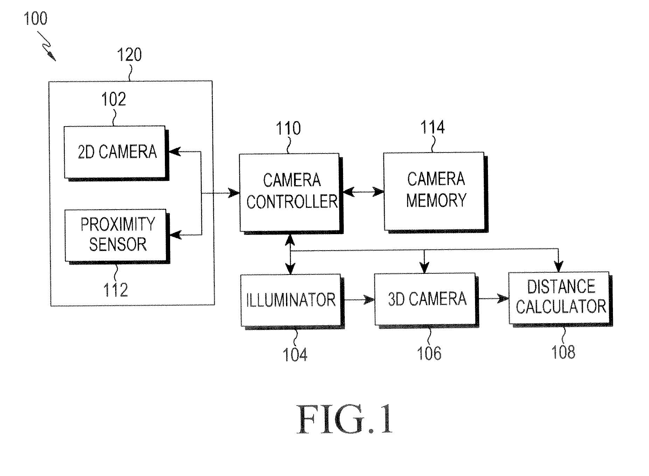

FIG. 1 illustrates a configuration of an apparatus for extracting three-dimensional (3D) distance information according to an embodiment of the present invention.

Referring to FIG 1, the apparatus 100 for extracting 3D distance information includes a target detector 120, an illuminator 104, a 3D camera 106, a distance calculator 108, a camera controller 110, and a camera memory 114.

The target detector 120 detects a recognition target before the 3D camera 106 recognizes a 3D image for the recognition target. According to an embodiment of the present invention, the target detector 120 may be implemented by a two-dimensional (2D) camera 102, or may be implemented by a proximity sensor 112. According to another embodiment of the present invention, the target detector 120 may also be implemented by both the 2D camera 102 and the proximity sensor 112. For convenience of description, FIG. 1 illustrates the target detector 120 including both the 2D camera 102 and the proximity sensor 112.

The 2D camera 102 performs a photographing operation by converting an image, which is input through the lens (not shown) provided in the 2D camera 102, into a 2D image. According to an embodiment of the present invention, the 2D camera 102 may convert an image, which is input through the lens (not shown), into a moving image.

According to this embodiment, the 2D camera 102 photographs an image input through the lens and converts the photographed image into a 2D image, thereby photographing a recognition target included in the image. In this way, the 2D camera 102 generates a 2D image including a recognition target.

The illuminator 104 emits light for allowing the 3D camera 106 to generate a 3D image before the 3D camera 106 performs a photographing operation. According to this embodiment, the illuminator 104 emits light, the quantity of which depends on the size of a recognition target, under the control of the camera controller 110. Also, the illuminator 104 may emit light, which has a predetermined pattern stored in the camera memory 114, onto a recognition target, and may emit light onto a specific section of a recognition target under the control of the camera controller 110.

The 3D camera 106 generates a 3D image for a recognition target. When the illuminator 104 emits light onto a recognition target, the 3D camera 106 generates the 3D image by receiving light reflected from the recognition target through its lens (not shown).

The distance calculator 108 calculates a distance to a recognition target, that is, a distance between the apparatus 100 for extracting 3D distance information and a recognition target, by using a 3D image generated by the 3D camera 106, and stores the calculated distance as distance information in the camera memory 114.

Since a 3D image generated by the 3D camera 106 is obtained by receiving light reflected from a recognition target (a subject), the size or shape of the recognition target included in the 3D image may vary depending on the distance between the recognition target and the 3D camera 106. Also, the time taken for light reflected from the recognition target to arrive at the 3D camera 106 may vary depending on the distance between the recognition target and the 3D camera 106. According to this embodiment, the time taken for light emitted from the illuminator 104 to be reflected from the recognition target and return to the 3D camera 106 may be included as time information in a 3D image.

According to this embodiment, the distance calculator 108 may calculate a distance between the 3D camera 106 and the recognition target by using the time information. Since the 3D camera 106 is mounted on the apparatus 100 for extracting 3D distance information, the distance calculated by the distance calculator 108 may be substantially a distance between the recognition target and the apparatus 100 for extracting 3D distance information.

A 3D image generated by the 3D camera 106 is obtained by receiving light reflected from the recognition target. Accordingly, the time taken for the reflected light to arrive at the 3D camera 106 varies according to portions of the recognition target because, even in the same recognition target, the angles, curvatures, and the like of respective portions of the recognition target are different. As an example, assuming that a recognition target is a hand, the time taken for light reflected from the first knuckle of a finger to arrive at the 3D camera 106 is different from the time taken for light reflected from the palm of the clenched hand to arrive at the 3D camera 106.

The distance calculator 108 may also calculate a distance between the 3D camera 106 and each portion of the recognition target, based on the time of arrival of reflected light, which varies depending on from which portion of the recognition target the light is reflected, as described above, that is, based on time information for each portion of the recognition target.

Further, the distance calculator 108 may store in the camera memory 114 a distance between the apparatus 100 for extracting 3D distance information and each portion of the recognition target, calculated as described above, under the control of the camera controller 110.

The camera controller 110 controls the overall operation of the apparatus 100 for extracting 3D distance information. The camera controller 110 determines if a recognition target is included in a 2D image generated by the 2D camera 102. When a recognition target is included in the 2D image, the camera controller 110 controls the illuminator 104 and the 3D camera 106 to generate a 3D image for the recognition target. On the other hand, when a recognition target is not included in the 2D image, the camera controller 110 does not drive the illuminator 104 and the 3D camera 106. In this way, the apparatus 100 for extracting 3D distance information according to an embodiment of the present invention drives the illuminator 104 and the 3D camera 106 only when a recognition target is included in the 2D image. Since the apparatus 100 for extracting 3D distance information according to this embodiment drives the illuminator 104 and the 3D camera 106 only when a recognition target is included in the 2D image, it saves power required to drive the illuminator 104 and the 3D camera 106.

According to an embodiment of the present invention, the camera controller 110 controls the illuminator 104 and the 3D camera 106, which are driven only when the recognition target is detected through the proximity sensor 112. When a recognition target is not detected through the proximity sensor 112, the camera controller 110 does not drive the illuminator 104 and the 3D camera 106. In this way, since the apparatus 100 for extracting 3D distance information according to this embodiment drives the illuminator 104 and the 3D camera 106 only when the recognition target is detected through the proximity sensor 112, it saves power required to drive the illuminator 104 and the 3D camera 106.

According to another embodiment of the present invention, the camera controller 110 controls the apparatus 100 for extracting 3D distance information to detect the recognition target by using both the proximity sensor 112 and the 2D camera 102. When a specific object is detected through the proximity sensor 112, the camera controller 110 controls the 2D camera 102 to photograph the specific object to generate the 2D image including the specific object. Using the 2D image generated by the 2D camera 102, the camera controller 110 determines if the specific object detected through the proximity sensor 112 corresponds to the recognition target.

When the specific object photographed by the 2D camera 102 corresponds to the recognition target, that is, when the recognition target is included in the 2D image, the camera controller 110 drives the illuminator 104 and the 3D camera 106 to generate the 3D image for the specific object. On the other hand, when the specific object photographed by the 2D camera 102 does not correspond to the recognition target, that is, when the recognition target is not included in the 2D image, the camera controller 110 does not drive the illuminator 104 and the 3D camera 106. In this way, since the apparatus 100 for extracting 3D distance information according to this embodiment first detects a recognition target through the target detector 120, it can reduce power consumption as compared to the prior art where the illuminator 104 and the 3D camera 106 are driven, even though whether or not a subject to be photographed corresponds to a recognition target is not known.

The camera memory 114 stores various data for controlling the overall operation of the apparatus 100 for extracting 3D distance information.

According to this embodiment, the camera memory 114 may store identification data for identifying a recognition target. As an example, assuming that a recognition target is a user's finger, the camera memory 114 may pre-store identification data, for example, various images including the finger or feature descriptors of the finger. The camera controller 110 compares a 2D image generated by the 2D camera 102 with the identification data. When the result of the comparison shows that an image of the user's finger is included in the 2D image, the camera controller 110 determines that a recognition target is included in the 2D image. With regard to this, the feature descriptors may be descriptors for identifying the finger (e.g., the existence of a fingerprint, the existence of a fingernail, the shape of the finger, etc.) in order to determine if the recognition target corresponds to the finger.

According to an embodiment of the present invention, identification data may be data previously input and stored by a user. As an example, the 2D camera 102 may store a 2D image, which is generated by photographing the user's finger, as identification data in the camera memory 114.

According to another embodiment of the present invention, the camera memory 114 may store the quantity of light emitted from the illuminator 104 according to the size of a recognition target. As an example, with reference to the camera memory 114, the camera controller 110 controls the illuminator 104 to emit light, the quantity of which is level 1, when the size of a recognition target included in the 2D image corresponds to levels 1 to 10, to emit light, the quantity of which is level 2, when the size of the recognition target included in the 2D image corresponds to levels 11 to 20, and to emit light, the quantity of which is level 3, when the size of the recognition target included in the 2D image corresponds to levels 21 to 30.

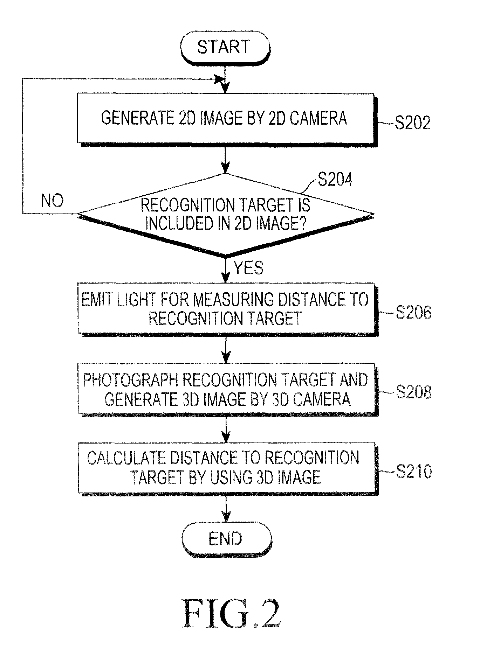

FIG. 2 illustrates an example of a method of extracting 3D distance information by the apparatus shown in FIG. 1.

Referring to FIG. 2, the apparatus 100 for extracting 3D distance information photographs at least one object to generate a 2D image by using the 2D camera 102 in step S202. If the 2D image is generated, then the camera controller 110 determines if a recognition target (e.g., a user's hand) is included in the 2D image in step S204.

When the result of the determination in step S204 shows that a recognition target is not included in the 2D image, the process returns to step S202 and the 2D camera 102 may generate 2D images by continuously photographing at least one object. According to an embodiment of the present invention, the camera controller 110 controls the 2D camera 102 to continuously photograph until an image corresponding to a recognition target, for example, a 2D image including the recognition target, is generated. According to another embodiment of the present invention, the camera controller 110 controls the 2D camera 102 to repeatedly photograph at pre-stored time intervals (e.g., at intervals of 1 minute) to continuously generate 2D images.

Also, according to an embodiment of the present invention, the camera controller 110 may determine if a recognition target is included in all of a plurality of 2D images photographed for a predetermined and pre-stored reference time (e.g., 1 second). When a recognition target is not included in all the 2D images photographed for the reference time, the camera controller 110 may determine that the recognition target does not exist in the angle of view range of the lens provided in the 2D camera 102, and terminate driving of the 2D camera 102.

When the result of the determination in step S204 shows that a recognition target is included in the 2D image, the camera controller 110 controls the illuminator 104 to emit light for measuring a distance to the recognition target, that is, a distance between the recognition target and the apparatus 100 for extraction 3D distance information in step S206. If the light is emitted from the illuminator 104 in this way, then the 3D camera 106 photographs the recognition target to generate a 3D image ins tep S208. The light emitted in step S206 is reflected from the recognition target, and an imaging sensor (not shown) of the 3D camera 106 photographs the recognition target by receiving the reflected light from the recognition target. According to this embodiment, in step S208, the 3D camera 106 may photograph the recognition target by receiving light reflected from the recognition target and converting the received reflected light into a 3D image.

If the 3D image corresponding to the recognition target is generated by the 3D camera 106, then the distance calculator 108 calculates a distance to the recognition target by using the generated 3D image in step S210. In this way, the apparatus 100 for extracting 3D distance information can know a distance between the apparatus 100 for extracting 3D distance information and the recognition target.

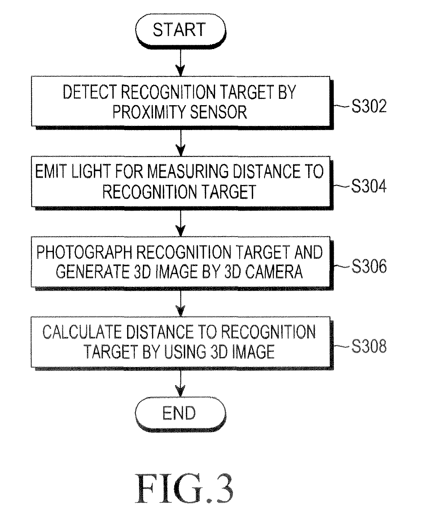

FIG. 3 illustrates another example of a method of extracting 3D distance information by the apparatus shown in FIG 1.

Referring to FIG. 3, the apparatus 100 for extracting 3D distance information detects a recognition target by using the proximity sensor 112 in step S302. According to this embodiment, the proximity sensor 112 may detect a recognition target entering within a predetermined range (e.g., a radius range of 10cm) from the proximity sensor 112.

If the recognition target is detected, then the camera controller 110 controls the illuminator 104 to emit light for measuring a distance to the recognition target, that is, a distance between the recognition target and the apparatus 100 for extraction 3D distance information in step S304. If the light is emitted from the illuminator 104 in this way, then the 3D camera 106 photographs the recognition target to generate a 3D image in step S306.

The light emitted in step S304 is reflected from the recognition target, and an imaging sensor (not shown) of the 3D camera 106 receives the reflected light from the recognition target. According to this embodiment, in step S306, the 3D camera 106 may photograph the recognition target by receiving light reflected from the recognition target and converting the received reflected light into a 3D image.

If the 3D image including the recognition target is generated by the 3D camera 106, then the distance calculator 108 calculates a distance to the recognition target, that is, a distance between the recognition target and the apparatus 100 for extracting 3D distance information, by using the generated 3D image in step S308.

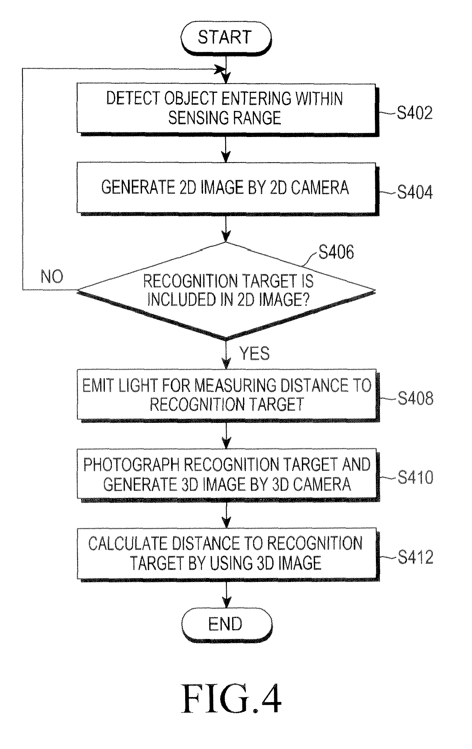

FIG. 4 illustrates yet another example of a method of extracting 3D distance information by the apparatus shown in FIG. 1.

Referring to FIG 4, the apparatus 100 for extracting 3D distance information detects an object entering within the sensing range of the proximity sensor 112 (e.g., within a radius of 10cm) by using the proximity sensor 112 in step S402. If an object is detected, then the camera controller 110 drives the 2D camera 102 to photograph the object, and thereby generates a 2D image including the object in step S404.

The object detected in step S402 through the proximity sensor 112 may not be a recognition target. When the object is not a recognition target, there is no need to generate a 3D image. Accordingly, before the apparatus 100 for extracting 3D distance information according to this embodiment generates a 3D image including the object detected through the proximity sensor 112, it first determines if the object is a recognition target. In order to determine if the object detected in step S402 is a recognition target, the camera controller 110 controls the 2D camera 102 to photograph the object to generate a 2D image corresponding to the object, for example, a 2D image including the object, in step S404. If the 2D image corresponding to the object is generated, then the camera controller 110 determines if a recognition target (e.g., a user's hand) is included in the 2D image in step S406.

When the result of the determination in step S406 shows that a recognition target is not included in the 2D image, the process returns to step S402 and the camera controller 110 controls the proximity sensor 112 to perform proximity sensing again to detect another object entering within its sensing range in step S402.

According to another embodiment of the present invention, when a specific object (e.g., a user's hand) is not detected for a predetermined and pre-stored reference time (e.g., 1 minute), the camera controller 110 may determine that a recognition target has not entered within the sensing range of the proximity sensor 112. Also, if the camera controller 110 determined that a recognition target has not entered within the sensing range of the proximity sensor 112, then it may terminate driving of the proximity sensor 112.

When the result of the determination in step S406 shows that a recognition target is included in the 2D image, the camera controller 110 controls the illuminator 104 to emit light for measuring a distance to the recognition target, that is, a distance between the recognition target and the apparatus 100 for extraction 3D distance information in step S408. If the light is emitted from the illuminator 104 in this way, then the 3D camera 106 photographs the recognition target to generate a 3D image corresponding to the recognition target in step S410. If the 3D image corresponding to the recognition target is generated by the 3D camera 106, then the distance calculator 108 calculates a distance to the recognition target by using the generated 3D image in step S412.

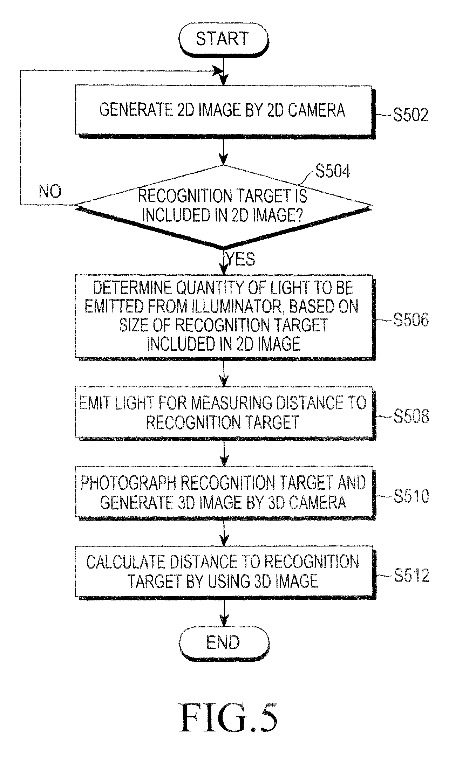

FIG. 5 illustrates still yet another example of a method of extracting 3D distance information by the apparatus shown in FIG. 1.

Referring to FIG. 5, the 2D camera 102 photographs at least one object to generate a 2D image corresponding to the object, for example, a 2D image including the object in step S502. If the 2D image is generated, then the camera controller 110 determines if a recognition target (e.g., a user's hand) is included in the 2D image in step S504.

When the result of the determination in step S504 shows that a recognition target is not included in the 2D image, the 2D camera 102 may generate 2D images by continuously photographing at least one object. According to an embodiment of the present invention, the camera controller 110 controls the 2D camera 102 to continously photograph until an image including a recognition target is generated.

When the result of the determination in step S504 shows that a recognition target is included in the 2D image, the camera controller 110 determines the quantity of light to be emitted from the illuminator 104, based on the size of the recognition target included in the 2D image in step S506.

According to this embodiment, the camera controller 110 may determine an approximate distance between the apparatus 100 for extracting 3D distance information and the recognition target by using the 2D image generated in step S502. For example, it is assumed that the total resolution of the 2D image is "800×600" pixels, that is, 480,000 pixels. As presented below in Table 1, a distance between a recognition target and the apparatus 100 for extracting 3D distance information and the quantity of light required to generate a 3D image for each distance may be stored according to recognition target sizes in the camera memory 114.

**Table 1**

| recognition target size (pixels) | distance to recognition target | required quantity of light |
|---|---|---|
| 10,001 ~ 50,000 | 1.1 ~ 3. 0 cm | Level 1 |
| 50,0001 ~ 100,000 | 3.1 ~ 6.0 cm | Level 2 |
| 100,001 ~ 150,000 | 6.1 ~ 9.0 cm | Level 3 |
| 150,001 ~ 200,000 | 9.1 ~ 12.0 cm | Level 4 |
| ··· | ··· | ··· |

In Table 1, assuming that the size of a recognition target included in the 2D image generated in step S502 is, for example, 120,000 pixels, the distance between the recognition target and the apparatus 100 for extracting 3D distance information corresponds to 6.1 to 9.0cm. Also, the quantity of light to be emitted from the illuminator 104, which is required to generate a 3D image corresponding to the recognition target having a size of 6.1 to 9.0cm, corresponds to Level 3. According to this embodiment, the camera controller 110 may determine the quantity of light to be emitted from the illuminator 104 by using predetermined information pre-stored in the camera memory 114, as shown above in Table 1.

If the quantity of light to be emitted from the illuminator 104 is determined, then the illuminator 104 emits light having the quantity of light determined in step S506 onto the recognition target in order to measure a distance between the recognition target and the apparatus 100 for extracting 3D distance information in step S508. If the light is emitted from the illuminator 104, then the 3D camera 106 photographs the recognition target to generate a 3D image corresponding to the recognition target in step S510. The light emitted in step S508 is reflected from the recognition target, and an imaging sensor (not shown) of the 3D camera 106 may generate a 3D image by receiving light reflected from the recognition target and converting the received reflected light into the 3D image.

If the 3D image corresponding to the recognition target, for example, a 3D image including the recognition target, is generated by the 3D camera 106, then the distance calculator 108 calculates a distance to the recognition target by using the generated 3D image in step S512.

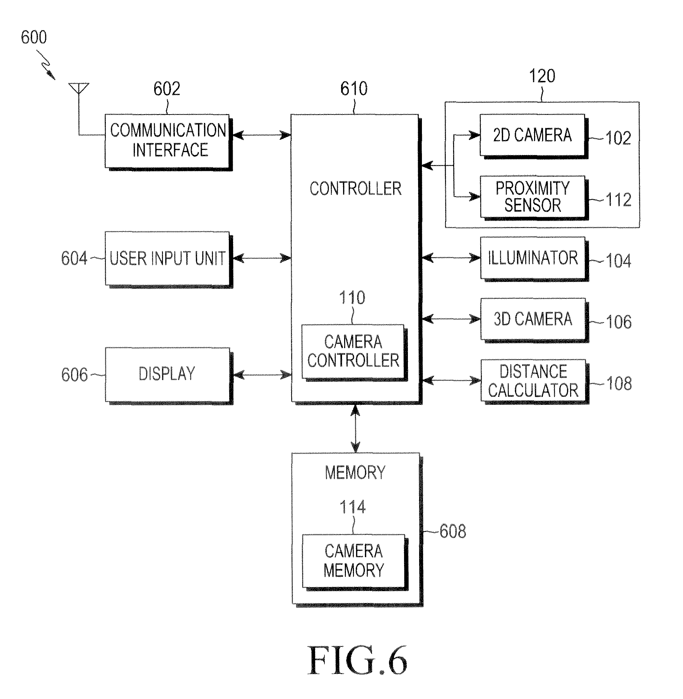

FIG. 6 illustrates a configuration of a terminal including the apparatus shown in FIG. 1.

As shown in FIG. 6, the respective constituent elements of the apparatus 100 for extracting 3D distance information may be implemented in the form of components embedded in the terminal 600. Referring to FIG 6, the terminal 600 includes the target detector 120 including the 2D camera 102 and the proximity sensor 112, the illuminator 104, the 3D camera 106, the distance calculator 108, the camera controller 110, the camera memory 114, a user input unit 604, a display 606, a memory 608 and a controller 610, and may further include a communication interface 602.

For the convenience of description, FIG. 6 shows the target detector 120 including both the 2D camera 102 and the proximity sensor 112. However, according to an embodiment of the present invention, the target detector 120 may be implemented by including at least one of the 2D camera 102 and the proximity sensor 112. Also, the camera controller 110 may be included in the controller 610, and the camera memory 114 may be included in the memory 608.

The communication interface 602 performs wired or wireless communication for the terminal 600. According to this embodiment, the communication interface 602 may perform, for example, short range wireless communication such as Bluetooth or WiFi. Also, the communication interface 602 may receive identification data for identifying a recognition target by performing wired or wireless communication. According to an embodiment of the present invention, the communication interface 602 may receive a call or a message (e.g., SMS (Short Message Service) or MMS (Multimedia Message Service)) from another terminal.

The user input unit 604 receives an input from a user. According to this embodiment, the user input unit 604 may receive a user input for measuring a distance between the terminal 600 and a recognition target. The user input unit 604 may also receive a user input for receiving a gesture input.

In this embodiment, a gesture input is an input when a user makes a specific gesture for controlling the terminal 600 by using his/her hand. That is, a user may input a gesture input into the terminal 600 by using his/her hand to make a gesture corresponding to any one of predetermined gesture inputs stored in the memory 608. According to an embodiment of the present invention, a user may also input a gesture input into the terminal 600 by driving the apparatus 100 for extracting 3D distance information, included in the terminal 600, and making a gesture toward the lens of the 2D camera 102 or 3D camera 106. According to this embodiment, the terminal 600 may receive a gesture input from a user, that is, a user input for driving the apparatus 100 for extracting 3D distance information, and thereby drive the apparatus 100 for extracting 3D distance information.

The display 606 displays various data stored in the terminal 600. According to an embodiment of the present invention, the display 606 may display a gesture input from a user in real time. Also, the display 606 may display various data required for the terminal 600 to perform an operation corresponding to the gesture input. As an example, when a user inputs a gesture input for playing back a moving image file stored in the memory 608, the display 606 may display the moving image while playing back the moving image file under the control of the controller 610.

The memory 608 stores various data for controlling the terminal 600. According to this embodiment, the memory 608 may store a plurality of gesture inputs and commands or terminal operations corresponding to the respective gesture inputs.

The controller 610 controls the overall operation of the terminal 600. According to this embodiment, the controller 610 includes the camera controller 110 of the apparatus 100 for extracting 3D distance information, and thus may perform various operations that are performed by the camera controller 110. The controller 610 may determine the shape of a recognition target, based on a 3D image generated by the 3D camera 106 and distance information generated by the distance calculator 108, and determine a gesture input corresponding to the determined shape of the recognition target. If a gesture input is determined, then the controller 608 determines and performs an operation of the terminal 600 corresponding to the determined gesture input.

According to another embodiment of the present invention, the controller may also determine the shape of a recognition target by using only the 3D image. Even when the shape of a recognition target is determined by using only the 3D image generated through the 3D camera 106, the controller 610 may determine a gesture input corresponding to the 3D image. Also, the controller 610 may control the terminal 600 to perform an operation corresponding to the determined gesture input.

According to an embodiment of the present invention, the controller 610 may determine whether to drive the apparatus 100 for extracting 3D distance information and perform the operation recognition function, according to states of the terminal 600. When the terminal 600 is maintained in the standby state or ready state, the controller 610 determines whether to perform the operation recognition function.

The operation recognition function refers to a function by which the terminal 600 may recognize a user's gesture input into the terminal 600 as a gesture input by using the apparatus 100 for extracting 3D distance information. The standby state indicates a state where the terminal 600 is powered on, but a separate event does not occur in the terminal 600 (e.g., a state where a user input is not input). The ready state indicates a state where the terminal 600 performs a function other than the operation recognition function. As an example, if the terminal 600 performs a message transmission/reception operation, an Internet connection operation, an e-book display operation, a music playback operation, a gaming operation, or the like, then it is in the ready state.

According to an embodiment of the present invention, the controller 610 may determine if a wake-up event occurs in the terminal 600. As an example, when the terminal 600 maintained in the standby state receives a call or message, the controller 610 may determine that a wake-up event occurs. Further, when the terminal 600 maintained in the standby state receives a user input through the user input unit 604, the controller 610 may also determine that a wake-up event occurs. Here, the user input may include a user input for performing the operation recognition function, a user input for performing a function other than the operation recognition function, and the like. When a wake-up event occurs, the terminal 600 is switched from the standby state to the ready state under the control of the controller 610.

If a wake-up event occurs in the terminal 600, then the controller 610 controls the terminal 600 to receive a gesture input from a user by driving the apparatus 100 for extracting 3D distance information. If a gesture input is received, the controller 610 controls the terminal 600 to perform an operation corresponding to the gesture input.

Even when the terminal 600 is maintained in the ready state, the controller 610 may determine whether to perform the operation recognition function. According to an embodiment of the present invention, the controller 610 may control the terminal 600 to perform the operation recognition function when a user input for performing the operation recognition function is input through the user input unit 604. Further, the controller 610 may control the terminal 600 to perform the operation recognition function when being switched from the standby state to the ready state.

According to an embodiment of the present invention, when the terminal 600 is in the ready state, the controller 610 determines if a user input for performing the operation recognition function is received. When such a user input is received, the controller 610 controls the terminal 600 to perform the operation recognition function. As an example, the terminal 600 may receive a user input for performing the operation recognition function while playing back a music file. If such a user input is received, then the controller 610 drives the apparatus 100 for extracting 3D distance information in order to receive a gesture input from a user. According to another embodiment of the present invention, when the terminal 600 is in the ready state, the controller 610 may control the target detector 120 to determine if a recognition target enters within a predetermined range (e.g., within a range of 10cm in the front of the terminal 600). When a recognition target enters within the predetermined range, the controller 610 may control the terminal 600 to perform the operation recognition function.

When a recognition target (e.g., a user's hand) enters within the angle of view range of the 2D camera 102 or is detected by the proximity sensor 112 in the ready state, the controller 610 controls the terminal 600 to perform the operation recognition function. That is, according to this embodiment, for example, the terminal 600 may play back a music file and at the same time receive a gesture input from a user. According to an embodiment of the present invention, when a recognition target exists within the angle of view range of the 2D camera 102 for a time pre-stored in the memory 608 (e.g., 1 second) or greater, the controller 610 controls the terminal 600 to perform the operation recognition function. Further, when a recognition target is continuously detected by the proximity sensor 112 for a pre-stored time (e.g., 1 second) or greater, the controller controls the terminal 600 to perform the operation recognition function.

As an example, it is assumed that the terminal 600 is in the ready state while playing back a music file. A user may make a gesture such that a recognition target, that is, the user's hand, exists within the angle of view range of the 2D camera 102 for 1 second or greater. The 2D camera 102 detects the recognition target, and the controller 610 controls the terminal 600 to perform the operation recognition function. If the operation recognition function is performed, then the terminal 600 receives a gesture input from the user. Since the terminal 600 is playing back the music file, the user may input a gesture input related to the playback of the music file into the terminal 600. As an example, the user may input "play", "pause", "fast-forward", "rewind", "stop", or the like as a gesture input into the terminal 600. The use may also input a gesture input unrelated to the playback of the music file into the terminal 600. As an example, when the terminal 600 is in the ready state while playing back the music file, it may receive a gesture input for performing a different application (e.g., Internet browser, game, e-book, call origination, etc.) from the user. In this case, the controller 610 controls the terminal 600 to play back the music file and at the same time drive the different application.

In the standby state or ready state, the controller 610 may control the apparatus 100 for extracting 3D distance information to detect a recognition target at predetermined time intervals (e.g., at intervals of 2 seconds). When a recognition target is detected, the controller 610 determines if the recognition target stays within the recognition range of the apparatus 100 for extracting 3D distance information for a predetermined time (e.g., 1 second) or greater. If the recognition target stays within the recognition range for the predetermined time or greater, then the controller 610 determines that a user will input a gesture input, and controls the terminal to perform the operation recognition function. The recognition range indicates the angle of view range of the 2D camera 102 or a range within which a recognition target can be detected by the proximity sensor 112.

According to an embodiment of the present invention, using the 2D camera 102, the controller may determine if a user stares at the display 606 of the terminal 600. When a user stares at the display 606, the controller 610 controls the terminal 600 to perform the operation recognition function. When the 2D camera 102 is implemented in such a manner as to confront a user of the terminal 600, the user's face may be positioned within the angle of view range of the 2D camera 102. Further, the 2D camera 102 may also receive an input of the user's face through its lens and convert the received input into a 2D image (face image). The controller 610 controls an operation of the terminal 600 according to the user's facial expression or pupil movement included in the face image. As an example, when the user's eye included in the face image is closed, or looks away from the display for a predetermined time interval, the controller 610 may power off the terminal 600. Further, when the user's pupil included in the face image moves downward, the controller 610 may move down the scrollbar of the display 606.

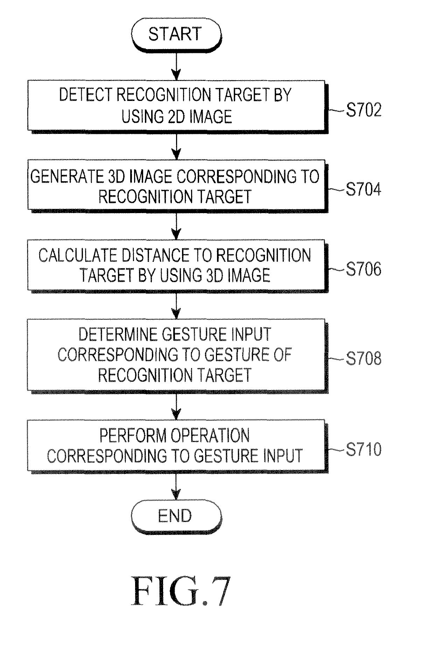

FIG. 7 illustrates an example of a method of performing an operation corresponding to a gesture input by the terminal shown in FIG. 6.

Referring to FIG 7, the controller 610 of the terminal 600 detects a recognition target by using a 2D image in step S702. To this end, the controller 610 may control the 2D camera 102 to photograph a specific object to generate a 2D image corresponding to the specific object. Since the controller 610 may be implemented in such a manner as to include the camera controller 110, the controller 610 may determine if the 2D image generated by the 2D camera 102, that is, the 2D image corresponding to the specific object, is a 2D image corresponding to a recognition target. This may be achieved by determining if a recognition target is included in the 2D image. When the recognition target is included in the 2D image, the controller 610 performs control such that the illuminator 104 and the 3D camera 106 generate a 3D image corresponding to the recognition target in step S704.

The controller 610 controls the distance calculator 108 to calculate a distance to the recognition target, that is, a distance between the terminal 600 and the recognition target, by using the generated 3D image in step S706. The distance calculated in step S706 by the distance calculator 108 is a distance between the 3D camera 106 and the recognition target, and may substantially correspond to a distance between the terminal 600 provided with the 3D camera 106 and the recognition target. The distance calculator 108 calculates a distance between the 3D camera 106 and the recognition target, and generates distance information including the calculated distance value. Also, the distance calculator 108 may store the distance information in the camera memory 114.

The controller 610 of the terminal 600 may determine the shape or gesture of the recognition target photographed by the 3D camera 106, based on the distance information and the 3D image. The controller 610 determines a gesture input corresponding to the gesture of the recognition target in step S708.

According to this embodiment, the controller 610 may compare the shape of the recognition target photographed by the 3D camera 106, that is, the gesture of the recognition target, with predetermined gesture inputs pre-stored in the memory 608 to determine if a gesture input having the same shape as (or a similar shape to) the gesture of the recognition target exists in the memory 608. When any one of the predetermined gesture inputs pre-stored in the memory 608 has the same shape as the gesture of the recognition target, the controller 610 determines the gesture of the recognition target as a gesture input. On the other hand, when none of the predetermined gesture inputs pre-stored in the memory 608 have the same shape as the gesture of the recognition target, the controller 610 determines that the gesture of the recognition target is not a gesture input. If the controller 610 determines that the gesture of the recognition target is not a gesture input, then it controls the terminal 600 so that it does not perform any other operation.

In this way, the controller 610 determines if the shape of the recognition target photographed by the 3D camera 106, that is, the gesture of the recognition target, corresponds to any one of the predetermined gesture inputs. When the gesture of the recognition target is determined to be any one of the predetermined gesture inputs, the controller 610 determines a command or terminal operation corresponding to the determined gesture input by scanning the memory 608.

If a gesture input corresponding to the gesture of the recognition target is determined in step S708, then the controller 610 determines and performs an operation corresponding to the gesture input in step S710.

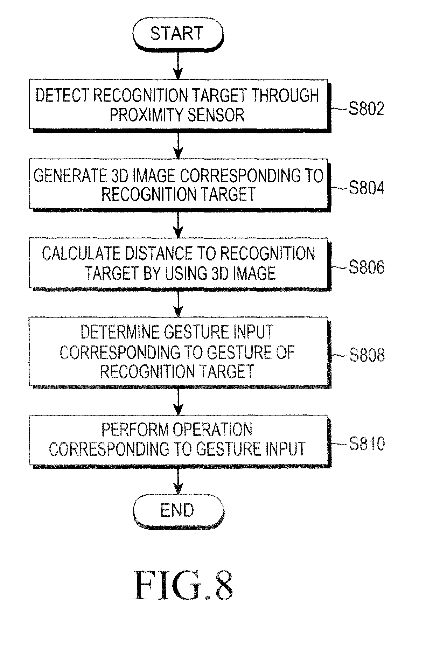

FIG. 8 illustrates another example of a method of performing an operation corresponding to a gesture input by the terminal shown in FIG. 6.

Referring to FIG. 8, the controller 610 of the terminal 600 detects a recognition target through the proximity sensor 112 in step S802. Since the controller 610 of the terminal 600 may be implemented in such a manner as to include the camera controller 110, as shown in FIG. 6, the controller 610 may identify a recognition target detected by the proximity sensor 112. If a recognition target is detected by the proximity sensor 112 in this way, then the controller 610 controls the illuminator 104 and the 3D camera 106 to generate a 3D image corresponding to the recognition target in step S804.

The controller 610 controls the distance calculator 108 to calculate a distance to the recognition target, that is, a distance between the terminal 600 and the recognition target, by using the generated 3D image in step S806. The distance between the terminal 600 and the recognition target may be stored as distance information in the camera memory 114. The controller 610 of the terminal 600 determines the shape of the recognition target photographed by the 3D camera 106, based on the distance information and the 3D image. The controller 610 determines a gesture input corresponding to the shape of the recognition target, that is, the gesture of the recognition target in step S808. If a gesture input corresponding to the gesture of the recognition target is determined, then the controller 610 determines and performs an operation corresponding to the gesture input in step S810.

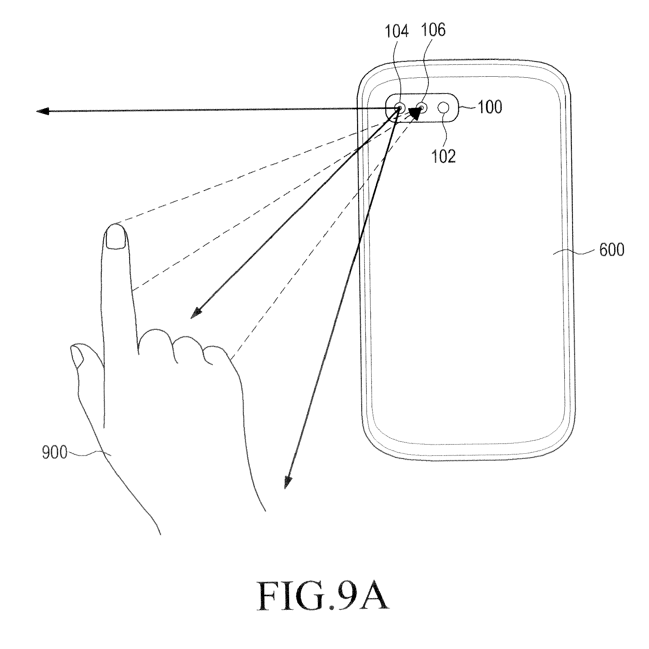

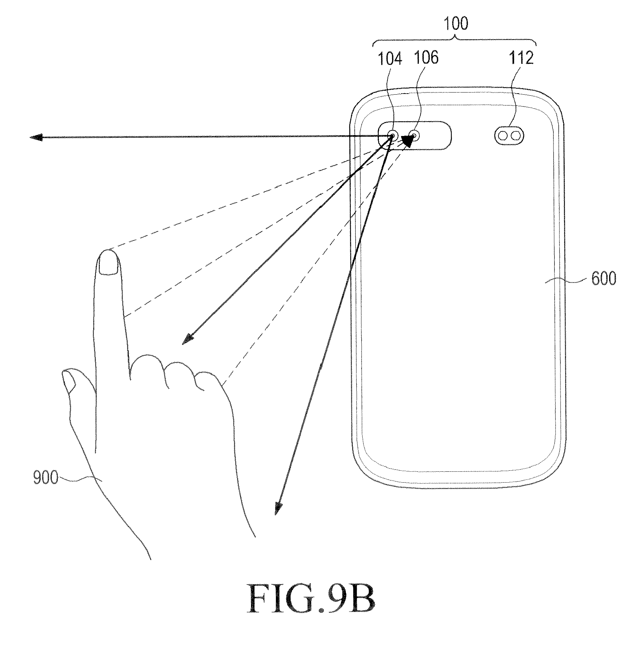

FIG. 9A illustrates a terminal which detects a recognition target by using a 2D camera, and FIG. 9B illustrates a terminal which detects a recognition target by using a proximity sensor. In FIGs. 9A and 9B, it is assumed that the illuminator 104, the 3D camera 106, the 2D camera 102, and the proximity sensor 112 are all disposed on the front face of the terminal 600.

Referring to FIG. 9A, a recognition target, that is, a user's hand 900, may be first detected through a 2D image generated by the 2D camera 102. When the user's hand 900 is detected, the illuminator 104 of the terminal 600 emits light (indicated by solid lines) in order to generate a 3D image corresponding to the hand 900, for example, a 3D image including the hand 900. The light emitted from the illuminator 104 is reflected by the recognition target (the hand 900), and the reflected light (indicated by dotted lines) from the hand 900 is input into the 3D camera 106. The 3D camera 106 receives the reflected light from the hand 900 to generate a 3D image for the hand 900.

Referring to FIG. 9B, a recognition target (a user's hand 900), may be first detected by the proximity sensor 112. When the user's hand 900 is detected, the illuminator 104 of the terminal 600 emits light (indicated by solid lines) in order to generate a 3D image for the hand 900. The light emitted from the illuminator 104 is reflected by the recognition target (the hand 900), and the reflected light (indicated by dotted lines) from the hand 900 is input into the 3D camera 106. The 3D camera 106 receives the reflected light from the hand 900 to generate a 3D image corresponding to the hand 900.

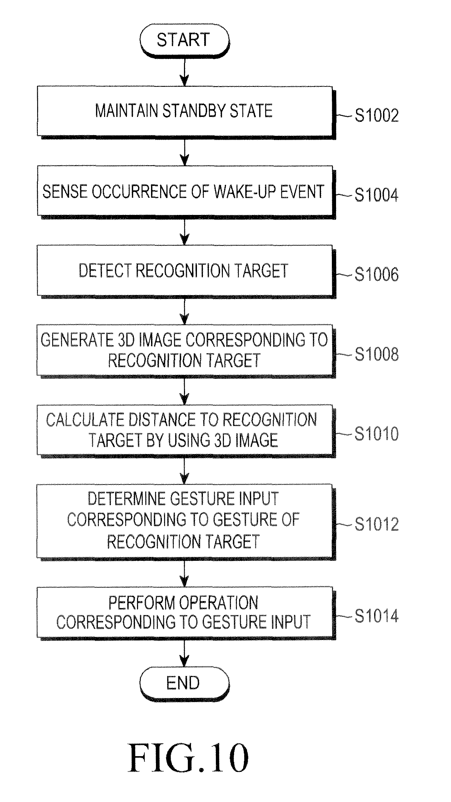

FIG. 10 illustrates yet another example of a method of performing an operation corresponding to a gesture input by the terminal shown in FIG. 6.

Referring to FIG. 10, the terminal 600 is maintained in the standby state in step S1002. If a wake-up event occurs in step S1004, then the terminal 600 drives the apparatus 100 for extracting 3D distance information to detect a recognition target in step S1006.

In this embodiment, the wake-up event indicates an event that switches the terminal 600 from the standby state to another state. As an example, the wake-up event corresponds to receiving a key input or touch input from a user, receiving a call or message by the terminal 600, and the like. In this embodiment, before the wake-up event occurs, that is, when the terminal 600 is in the standby state, the apparatus 100 for extracting 3D distance information does not perform operations for distance measurement (e.g., driving of the 2D camera 102, driving of the proximity sensor 112, light emission from the illuminator 104, driving of the 3D camera 106, etc.).

According to an embodiment of the present invention, the terminal 600 detects a recognition target by using the 2D camera 102 of the target detector 120 in step S1006. Accordingly, the controller 610 of the terminal 600 drives the 2D camera 102 to photograph a recognition target, and thereby generates a 2D image including the recognition target. Also, the controller 610 determines if the recognition target is included in the 2D image. When the recognition target is included in the 2D image, the controller 610 controls the illuminator 104 to emit light for measuring a distance to the recognition target. The 3D camera 106 photographs the recognition target by receiving light reflected from the recognition target.

According to another embodiment of the present invention, the terminal 600 may detect a recognition target by using the proximity sensor 112 of the target detector 120 in step S1006. Accordingly, the proximity sensor 112 detects a recognition target entering within a predetermined range (e.g., within a radius range of 10cm) from the proximity sensor 112. When the recognition target is detected, the camera controller 110 controls the illuminator 104 to emit light for measuring a distance to the recognition target, that is, a distance between the recognition target and the apparatus 100 for extracting 3D distance information. The 3D camera 106 photographs the recognition target by receiving light reflected from the recognition target.

If the recognition target is detected in this way, then the terminal generates a 3D image corresponding to the recognition target in step S1008. The distance calculator 108 calculates a distance to the recognition target, that is, a distance between the terminal 600 and the recognition target in step S1010. The distance between the 3D camera 106 and the recognition target may be stored as distance information in the camera memory 114.

The controller 610 of the terminal 600 determines the shape of the recognition target photographed by the 3D camera 106, based on the distance information and the 3D image. The controller 610 determines a gesture input corresponding to the shape of the recognition target, that is, the gesture of the recognition target in step S1012. If a gesture input corresponding to the gesture of the recognition target is determined, then the controller 610 determines and performs an operation corresponding to the gesture input in step S1014.

According to an embodiment of the present invention, whether or not a wake-up event occurs in the terminal 600 may be determined at pre-stored time intervals while the terminal 600 is maintained in the standby state.

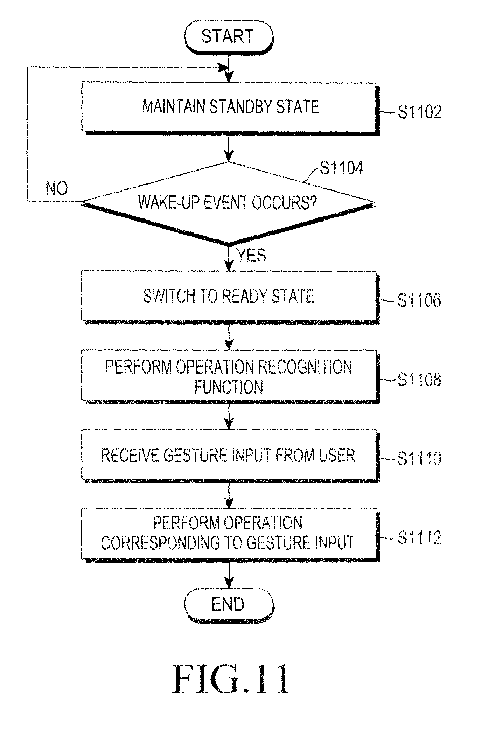

FIG. 11 illustrates still yet another example of a method of performing an operation corresponding to a gesture input by the terminal shown in FIG. 6.

Referring to FIG 11, the terminal 600 is first maintained in the standby state in step S 1102. In this embodiment, the standby state indicates a state where the terminal 600 is powered on, but does not perform any other operation. The controller 610 determines if a wake-up event occurs in the terminal 600 in step S 1104.

When the result of the determination in step S 1104 shows that a wake-up event occurs, the terminal 600 is switched to the ready state in step S 1106. The wake-up event may correspond to receiving a call, message, or user input for switching the terminal 600 to the ready state. When the terminal 600 is switched to the ready state, it performs the operation recognition function under the control of the controller 610 in step S1108. In performing the operation recognition function, the controller 610 recognizes a user's gesture by using the apparatus 100 for extracting 3D distance information. The terminal 600 receives a gesture input from a user in step S1110, and performs an operation corresponding to the received gesture input in step S 1112.

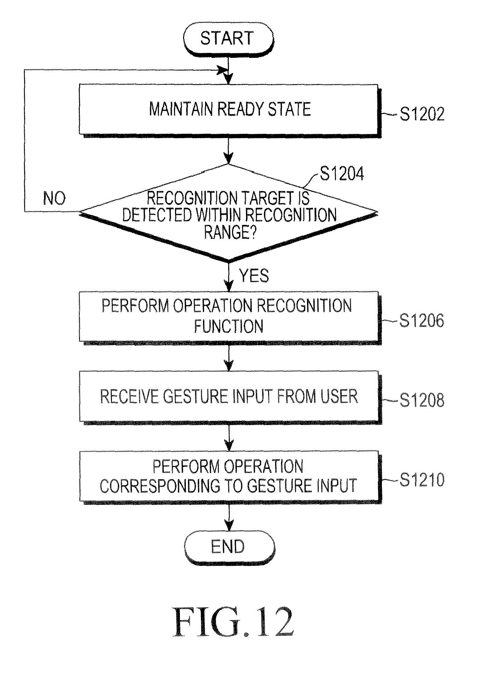

FIG. 12 illustrates still yet another example of a method of performing an operation corresponding to a gesture input by the terminal shown in FIG. 6.

Referring to FIG. 12, the terminal 600 is first maintained in the ready state in step S1202. In this embodiment, the ready state indicates a state where the terminal performs a function other than the operation recognition function or a state after the terminal 600 receives a user input for performing various functions including the operation recognition function. In the ready state, the controller 610 of the terminal 600 determines if a recognition target is detected within a recognition range in step S1204.

When the result of the determination in step S 1104 shows that a recognition target is detected within a recognition range, the terminal performs the operation recognition function in step S1206. In performing the operation recognition function, the controller 610 may recognize a user's gesture as a gesture input by using the apparatus 100 for extracting 3D distance information. The terminal 600 receives a gesture input from a user in step S1208, and performs an operation corresponding to the received gesture input in step S1210.

On the other hand, when the result of the determination in step S1204 shows that a recognition target is not detected within a recognition range, the terminal 600 is maintained in the ready state in step S1202.

According to the present invention as described above, a method and apparatus is provided, which enables a gesture input from a user to be correctly recognized using distance information from the recognition target, and at the same time makes it possible to efficiently save power required for detection of the gesture input.

It may be appreciated that the method and apparatus for extracting 3D distance information according to the embodiments of the present invention can be implemented in software, hardware, or a combination thereof. Any such software may be stored, for example, in a volatile or non-volatile storage device such as a ROM, a memory such as a RAM, a memory chip, a memory device, or a memory IC, or an optically or magnetically readable and machine (e.g., computer)-readable storage medium such as a CD, a DVD, a magnetic disk, or a magnetic tape, regardless of its ability to be erased or its ability to be re-recorded.

It can be also appreciated that the memory included in the mobile terminal is one example of machine-readable devices suitable for storing a program including instructions that are executed by a processor device to thereby implement embodiments of the present invention. Accordingly, the present invention includes a program for a code implementing the apparatus and method described in the appended claims of the specification and a machine (a computer or the like)-readable storage medium for storing the program. Moreover, such a program as described above can be electronically transferred through an arbitrary medium such as a communication signal transferred through cable or wireless connection, and the present invention properly includes things equivalent to that. In addition, the above-described electronic apparatus may receive and store the program from a program supply apparatus wiredly or wirelessly connected thereto. The program providing apparatus may include a memory for storing a program containing instructions for allowing the camera apparatus to perform a preset content protecting method and information required for the content protecting method, a communication unit for performing wired or wireless communication with the camera apparatus, and a controller for transmitting the corresponding program to the camera apparatus according to a request of the camera apparatus or automatically.

The invention provides at least the following embodiments:
1. A method of extracting three-dimensional (3D) distance information using an apparatus for extracting the 3D distance information, the method comprising:
   determining if a recognition target exists within a predetermined range;
   when the recognition target exists within the predetermined range, generating a 3D image of the recognition target; and
   calculating a distance to the recognition target by using the 3D image.
2. The method of embodiment 1, wherein determining if the recognition target exists within the predetermined range comprises:
   receiving an image input through a lens to generate a two-dimensional (2D) image;
   determining if the recognition target is included in the 2D image; and
   when the recognition target is included in the 2D image, determining that the recognition target exists within the predetermined range.
3. The method of embodiment 1, wherein determining if the recognition target exists within the predetermined range comprises:
   detecting a specific object entering within the predetermined range; and
   when the specific object is detected, determining that the recognition target exists within the predetermined range.
4. The method of embodiment 1, wherein determining if the recognition target exists within the predetermined range comprises:
   detecting a specific object entering within the predetermined range;
   when the specific object is detected, generating a 2D image including the specific object;
   determining if the recognition target is included in the 2D image; and
   when the recognition target is included in the 2D image, determining that the recognition target exists within the predetermined range.
5. An apparatus for extracting three-dimensional (3D) distance information, the apparatus comprising:
   a camera controller that determines if a recognition target exists within a predetermined range;
   a 3D camera that generates a 3D image of the recognition target when the recognition target exists within the predetermined range; and
   a distance calculator that calculates a distance to the recognition target by using the 3D image.
6. The apparatus of embodiment 5, further comprising a two-dimensional (2D) camera that receives an image input through a lens to generate a 2D image,
   wherein the camera controller determines if the recognition target is included in the 2D image, and when the recognition target is included in the 2D image, determines that the recognition target exists within the predetermined range.
7. The apparatus of embodiment 5, further comprising a proximity sensor that detects a specific object entering within the predetermined range,
   wherein, when the specific object enters within the predetermined range, the camera controller determines that the recognition target exists within the predetermined range.
8. The apparatus of embodiment 5, further comprising:
   a proximity sensor that detects a specific object entering within the predetermined range; and
   a 2D camera that receives an image input through a lens to generate a 2D image, wherein, when the specific object enters within the predetermined range, the camera controller controls the 2D camera to generate the 2D image corresponding to the specific object, to determine if the recognition target is included in the 2D image, and when the recognition target is included in the 2D image, to determine that the recognition target exists within the predetermined range.
9. A terminal comprising:
   a target detector configured to detect a recognition target existing within a predetermined range;
   a three-dimensional (3D) camera configured to generate a 3D image corresponding to the recognition target;
   a distance calculator configured to calculate a distance to the recognition target by using the 3D image; and
   a controller configured to:
      determine a gesture input corresponding to a shape of the recognition target, based on the 3D image and the distance to the recognition target, and
      perform an operation according to the gesture input.
10. The terminal of embodiment 9, wherein the controller searches a gesture input including a gesture having the shape of the recognition target among pre-stored gesture inputs, and as a result of search, determines the gesture input including the gesture having the shape of the recognition target as the gesture input corresponding to the shape of the recognition target.
11. The terminal of embodiment 9, wherein the target detector comprises a two-dimensional (2D) camera that receives an image input through a lens to generate a 2D image, and
   wherein the controller determines if the recognition target is included in the 2D image, and when the recognition target is included in the 2D image, determines that the recognition target exists within the predetermined range.
12. The terminal of embodiment 9, wherein the target detector comprises a proximity sensor that detects a specific object entering within the predetermined range, and
   wherein, when the specific object enters within the predetermined range, the controller determines that the recognition target exists within the predetermined range.
13. The terminal of embodiment 9, wherein the target detector comprises:
   a proximity sensor that detects a specific object entering within the predetermined range; and
   a 2D camera that receives an image input through a lens to generate a 2D image,
      and
   wherein, when the specific object enters within the predetermined range, the controller controls the 2D camera to generate the 2D image corresponding to the specific object, determines if the recognition target is included in the 2D image, and when the recognition target is included in the 2D image, determines that the recognition target exists within the predetermined range.
14. The terminal of embodiment 9, wherein the controller determines if a wake-up event occurs when the terminal is maintained in a standby state, and when the wake-up event occurs, controls the target detector to detect the recognition target.
15. The terminal of embodiment 9, wherein, when the terminal is in a ready state, the controller controls the target detector to detect the recognition target.
16. The terminal of embodiment 15, wherein, when the recognition target is not detected within a predetermined reference time, the controller determines that the recognition target does not exist within the predetermined range.
17. A method of performing an operation corresponding to a gesture input by a terminal, the method comprising:
   detecting a recognition target existing within a predetermined range;
   generating a three-dimensional (3D) image corresponding to the recognition target;
   calculating a distance to the recognition target by using the 3D image;
   determining a gesture input corresponding to a shape of the recognition target, based on the 3D image and the distance to the recognition target; and
   performing an operation according to the gesture input.
18. The method of embodiment 17, wherein detecting the recognition target existing within the predetermined range comprises:
   receiving an image input through a lens to generate a two-dimensional (2D) image;
   determining if the recognition target is included in the 2D image; and
   when the recognition target is included in the 2D image, determining that the recognition target exists within the predetermined range.
19. The method of embodiment 17, wherein detecting the recognition target existing within the predetermined range comprises:
   detecting a specific object entering within the predetermined range; and
   when the specific object is detected, determining that the recognition target exists within the predetermined range.
20. The method of embodiment 17, wherein detecting the recognition target existing within the predetermined range comprises:
   detecting a specific object entering within the predetermined range;
   when the specific object is detected, generating a 2D image including the specific object;
   determining if the recognition target is included in the 2D image; and
   when the recognition target is included in the 2D image, determining that the recognition target exists within the predetermined range.
21. The method of embodiment 17, wherein determining the gesture input corresponding to the shape of the recognition target, based on the 3D image and the distance to the recognition target, comprises:
   searching a gesture input including a gesture having the shape of the recognition target among pre-stored gesture inputs; and
   as a result of the searching, determining the gesture input including the gesture having the shape of the recognition target as the gesture input corresponding to the shape of the recognition target.
22. The method of embodiment 17, further comprising before detecting the recognition target existing within the predetermined range:
   determining if a wake-up event occurs in the terminal maintained in a standby state; and
   when the wake-up event occurs, detecting the recognition target entering within the predetermined range by using at least one of a two-dimensional (2D) camera and a proximity sensor.
23. The method of embodiment 17, further comprising, before detecting the recognition target existing within the predetermined range, detecting the recognition target entering within the predetermined range by using at least one of a 2D camera and a proximity sensor when the terminal is in a ready state.
24. The method of embodiment 17, further comprising, when the recognition target is not detected within a predetermined reference time, determining that the recognition target does not exist within the predetermined range.
25. A non-transitory computer-readable recording medium having programs stored thereon, which when executed by a processor, perform a method of extracting three-dimensional (3D) distance information using an apparatus for extracting the 3D distance information, the method comprising:
   determining if a recognition target exists within a predetermined range;
   when the recognition target exists within the predetermined range, generating a 3D image for the recognition target; and
   calculating a distance to the recognition target by using the 3D image.
26. A non-transitory computer-readable recording medium having programs stored thereon, which when executed by a processor, perform a method of performing an operation corresponding to a gesture input by a terminal, the method comprising:
   detecting a recognition target existing within a predetermined range;
   generating a three-dimensional (3D) image corresponding to the recognition target;
   calculating a distance to the recognition target by using the 3D image;
   determining a gesture input corresponding to a shape of the recognition target, based on the 3D image and the distance to the recognition target; and
   performing an operation according to the gesture input.

While the invention has been shown and described with reference to certain embodiments thereof, it will be understood by those skilled in the art that various changes in form and details may be made therein without departing from the scope of the invention as defined by the appended claims.

## Claims

1. A method of extracting three-dimensional (3D) distance information using an apparatus for extracting the 3D distance information, the method comprising:
determining if a recognition target exists within a predetermined range;
when the recognition target exists within the predetermined range, generating a 3D image of the recognition target; and
calculating a distance to the recognition target by using the 3D image.

2. An apparatus for extracting three-dimensional (3D) distance information, the apparatus comprising:
a camera controller that determines if a recognition target exists within a predetermined range;
a 3D camera that generates a 3D image of the recognition target when the recognition target exists within the predetermined range; and
a distance calculator that calculates a distance to the recognition target by using the 3D image.

3. The apparatus of claim 2, further comprising a two-dimensional (2D) camera that receives an image input through a lens to generate a 2D image,
wherein the camera controller determines if the recognition target is included in the 2D image, and when the recognition target is included in the 2D image, determines that the recognition target exists within the predetermined range.

4. The apparatus of claim 2 or 3, further comprising a proximity sensor that detects a specific object entering within the predetermined range,
wherein, when the specific object enters within the predetermined range, the camera controller determines that the recognition target exists within the predetermined range.

5. The apparatus of claim 2 or 3, further comprising:
a proximity sensor that detects a specific object entering within the predetermined range; and
a 2D camera that receives an image input through a lens to generate a 2D image, wherein, when the specific object enters within the predetermined range, the camera controller controls the 2D camera to generate the 2D image corresponding to the specific object, to determine if the recognition target is included in the 2D image, and when the recognition target is included in the 2D image, to determine that the recognition target exists within the predetermined range.

6. A terminal comprising:
a target detector configured to detect a recognition target existing within a predetermined range;
a three-dimensional (3D) camera configured to generate a 3D image corresponding to the recognition target;
a distance calculator configured to calculate a distance to the recognition target by using the 3D image; and
a controller configured to:
determine a gesture input corresponding to a shape of the recognition target, based on the 3D image and the distance to the recognition target, and
perform an operation according to the gesture input.

7. The terminal of claim 6, wherein the controller searches a gesture input including a gesture having the shape of the recognition target among pre-stored gesture inputs, and as a result of search, determines the gesture input including the gesture having the shape of the recognition target as the gesture input corresponding to the shape of the recognition target.

8. The terminal of claim 6 or 7, wherein the target detector comprises a two-dimensional (2D) camera that receives an image input through a lens to generate a 2D image, and
wherein the controller determines if the recognition target is included in the 2D image, and when the recognition target is included in the 2D image, determines that the recognition target exists within the predetermined range.

9. The terminal of any one of claims 6 to 8, wherein the target detector comprises a proximity sensor that detects a specific object entering within the predetermined range, and
wherein, when the specific object enters within the predetermined range, the controller determines that the recognition target exists within the predetermined range.

10. The terminal of any one of claims 6 to 8, wherein the target detector comprises:
a proximity sensor that detects a specific object entering within the predetermined range; and
a 2D camera that receives an image input through a lens to generate a 2D image,
and
wherein, when the specific object enters within the predetermined range, the controller controls the 2D camera to generate the 2D image corresponding to the specific object, determines if the recognition target is included in the 2D image, and when the recognition target is included in the 2D image, determines that the recognition target exists within the predetermined range.

11. The terminal of any one of claims 6 to 10, wherein the controller determines if a wake-up event occurs when the terminal is maintained in a standby state, and when the wake-up event occurs, controls the target detector to detect the recognition target.

12. The terminal of any one of claims 6 to 11, wherein, when the terminal is in a ready state, the controller controls the target detector to detect the recognition target;
wherein, preferably, when the recognition target is not detected within a predetermined reference time, the controller determines that the recognition target does not exist within the predetermined range.

13. A method of performing an operation corresponding to a gesture input by a terminal, the method comprising:
detecting a recognition target existing within a predetermined range;
generating a three-dimensional (3D) image corresponding to the recognition target;
calculating a distance to the recognition target by using the 3D image;
determining a gesture input corresponding to a shape of the recognition target, based on the 3D image and the distance to the recognition target; and
performing an operation according to the gesture input.

14. A non-transitory computer-readable recording medium having programs stored thereon, which when executed by a processor, perform a method of extracting three-dimensional (3D) distance information using an apparatus for extracting the 3D distance information, the method comprising:
determining if a recognition target exists within a predetermined range;
when the recognition target exists within the predetermined range, generating a 3D image for the recognition target; and
calculating a distance to the recognition target by using the 3D image.

15. A non-transitory computer-readable recording medium having programs stored thereon, which when executed by a processor, perform a method of performing an operation corresponding to a gesture input by a terminal, the method comprising:
detecting a recognition target existing within a predetermined range;
generating a three-dimensional (3D) image corresponding to the recognition target;
calculating a distance to the recognition target by using the 3D image;
determining a gesture input corresponding to a shape of the recognition target, based on the 3D image and the distance to the recognition target; and
performing an operation according to the gesture input.
